# EUROPÄISCHE PATENTSCHRIFT

(11) **EP 0 594 752 B1**
(45) Veröffentlichungstag und Bekanntmachung des Hinweises auf die Patenterteilung: **15.11.1995**
(21) Anmeldenummer: 92915831.9
(22) Anmeldetag: 14.07.1992
(51) Int. Cl.: F16L 9/12, F16L 9/02, B03C 3/06, F28F 1/04

(54) **VORRICHTUNG ZUM TRANSPORT VON STOFFEN**
DEVICE FOR THE TRANSPORT OF MATERIALS
DISPOSITIF DE TRANSPORT DE SUBSTANCES

(30) Priorität: 17.07.1991 DE 4123617
(43) Veröffentlichungstag der Anmeldung: 04.05.1994
(73) Patentinhaber: METALLGESELLSCHAFT AKTIENGESELLSCHAFT, 60015 Frankfurt (DE)
(72) Erfinder: SCHULMERICH, Christian, D-6369 Nidderau 1 (DE); MÖLLER, Wilhelm, D-6078 Neu-Isenburg (DE)
(86) Internationale Anmeldenummer: EP9201581
(87) Internationale Veröffentlichungsnummer: WO9302312

(56) Entgegenhaltungen:
- DE-A- 2 641 114
- DE-C- 3 900 553
- FR-A- 1 533 891
- US-A- 4 441 897

## Beschreibung

Die Erfindung bezieht sich auf eine Vorrichtung zum Transport von Stoffen.

Verschiedenartige Vorrichtungen zum Transport von Stoffen, die u.a. auch als Elektroabscheider eingesetzt werden, sind bekannt. So wird in der DE-PS 963868 eine Vorrichtung zur elektrischen Niederschlagung von Nebel und Stäuben beschrieben, bei der die Wände der Gaskanäle gleichzeitig Niederschlagselektroden sind und bei der diese Niederschlagselektroden aus einzelnen Bauteilen aus porösem, nichtmetallischem Material zusammengesetzt sind, wobei die Niederschlagselektroden von Kanälen für eine elektrisch leitende Spülflüssigkeit durchzogen werden und das nichtmetallische Material porös genug ist, um ein Abspülen der Oberflächen der Niederschlagselektroden mit dieser von den Kanälen zur Oberfläche durchdringenden Flüssigkeit zu ermöglichen. Dabei ist es möglich, daß als Bauteile hohle, rechteckige Platten eingesetzt werden, die an zwei gegenüberliegenden Seiten unter einem Winkel von 120° abgeschrägte Kanten aufweisen und an diesen Seiten wabenartig miteinander verbunden sind. Die einzelnen Bauteile werden bei dieser Anordnung durch eine dünne Schicht von Kittmaterial, die über die gesamte Länge der einzelnen Waben angeordnet ist, verbunden, so daß sie zu einem völlig selbsttragenden, stabilen System werden.

In der DE-PS 2641114 wird ein Verfahren zur Herstellung eines Kunststoff-Elektrofilters in Wabenform durch Zusammenfügen von im Querschnitt spundwandförmigen, aus glasfaserverstärktem Polyester bestehenden warmgepreßten Plattenstreifen beschrieben, wobei die einzelnen Plattenstreifen jeweils mit Flanschen versehen werden, die über die gesamte Länge des Wabenbündels miteinander verbunden werden. Die Plattenstreifen werden entweder miteinander verklebt, wobei vorteilhafterweise Harz verwendet wird, oder, sofern die Plattenstreifen aus einem Thermoplastmaterial bestehen, durch Schweißen miteinander verbunden.

In der US-PS 4,441,897 wird ein elektrostatischer Abscheider beschrieben, bei dem die Niederschlagselektroden ebenfalls in Form eines wabenförmigen Gitters angeordnet sind. Auch bei diesem elektrostatischen Abscheider ist jede einzelne Niederschlagselektrode über die gesamte Wabenlänge mit der jeweils benachbarten Niederschlagselektrode verbunden.

Bei den o.g. Vorrichtungen zum Transport von Stoffen, bei denen zu reinigendes Abgas innerhalb mehrerer wabenartiger Rohre transportiert wird, ist nachteilig, daß zur Herstellung des Wabengitters an mehreren Stellen jeweils über die gesamte Länge der Rohre eine feste Verbindung durch beispielsweise Schweißen oder Kleben erfolgen muß, um dem Wabengitter eine ausreichende Stabilität zu geben. In der Regel muß das Aneinanderfügen der einzelnen Bauteile des Wabengitters manuell vorgenommen werden, ist relativ schwer durchführbar und mit hohen Kosten verbunden.

Der Erfindung liegt daher die Aufgabe zugrunde, eine stabile Vorrichtung zum Transport von Stoffen zu schaffen, bei der das Aneinanderfügen der einzelnen Bauteile relativ einfach und kostengünstig durchgeführt werden kann.

Die der Erfindung zugrundeliegende Aufgabe wird durch eine Vorrichtung zum Transport von Stoffen gelöst, die mindestens aus einem ersten Rohr und einem zweiten Rohr mit jeweils sechseckigem, wabenförmigem Strömungsquerschnitt besteht, wobei das erste Rohr zwei oder drei nicht nebeneinander angeordnete erste Wandteile aufweist, deren Längskanten im ersten Abstand zur jeweiligen, der Längskante am nächsten liegenden Verbindungsstelle zwischen dem ersten Wandteil und dem benachbarten zweiten Wandteil angeordnet sind und bei der an den ersten Wandteilen auf ihren, den zu transportierenden Stoffen abgewandten, Seiten im zweiten Abstand von der jeweils am nächsten liegenden Längskante plattenförmige Laschen angeordnet sind, die zu den jeweils nächstliegenden Längskanten geneigt sind, wobei der Neigungswinkel zwischen der Ebene der jeweiligen Lasche und der Ebene des jeweiligen ersten Wandteils 60° beträgt und wobei das zweite Rohr mindestens ein entsprechendes erstes Wandteil aufweist, was parallel zum zweiten Wandteil des ersten Rohres angeordnet ist, wobei die Flächen der Laschen des ersten Wandteils des zweiten Rohres, die den jeweiligen Schenkel des Neigungswinkels bilden, an einem Teil des jeweils am nächsten angeordneten ersten Wandteils des ersten Rohres anliegen.

Unter dem Transport von Stoffen ist die Beförderung von gasförmigen, flüssigen oder festen Stoffen oder Mischungen davon, wie beispielsweise Suspensionen, zu verstehen. Der erste Abstand beträgt 10 bis 50 mm, der zweite Abstand beträgt 30 bis 150 mm. Es hat sich in überraschender Weise gezeigt, daß die einzelnen Bauelemente der erfindungsgemäßen Vorrichtung mit einem relativ geringen Aufwand aneinandergefügt werden können, wobei auf einen manuellen Fügevorgang verzichtet werden kann. Darüberhinaus weist die erfindungsgemäße Vorrichtung zum Transport von Stoffen eine relativ hohe Stabilität auf, so daß die Stoffe mit einer relativ hohen Geschwindigkeit transportiert werden können und durch die Strömung hervorgerufene Schwingungen ausgeglichen werden.

Eine bevorzugte Ausgestaltung der Erfindung besteht darin, daß mindestens das erste Rohr und zweite Rohr aus einem metallischen Werkstoff oder einem elektrisch leitenden Kunststoff bestehen. Dies hat den Vorteil, daß die einzelnen Rohre der erfindungsgemäßen Vorrichtung aus einem Stück gefertigt werden können und daß verunreinigte Abgase als zu transportierende Stoffe während des Transports elektrostatisch gereinigt werden können, wobei die einzelnen Rohre als Niederschlagselektroden wirken. Als metallische Werkstoffe können dabei beispielsweise Blei oder Aluminium eingesetzt werden. Als elektrisch leitende Kunststoffe können beispielsweise mit Graphit versetztes Polyvinylchlorid oder mit Graphit versetztes Polypropylen verwendet werden.

Nach einer weiteren bevorzugten Ausgestaltung der Erfindung sind mindestens das erste Rohr und das zweite Rohr an den Stirnseiten der Laschen durch mindestens eine Verbindungsstelle miteinander verbunden. Durch diese Maßnahme kann die Stabilität der erfindungsgemäßen Vorrichtung erhöht werden.

Gemäß einer weiteren bevorzugten Ausgestaltung der Erfindung ist mindestens ein Hohlraum zwischen mindestens einem ersten Rohr und einem zweiten Rohr mit einem Schaumstoff gefüllt. Dabei kann als Schaumstoff beispielsweise Polyurethan eingesetzt werden. Ist mindestens ein Hohlraum zwischen mindestens einem ersten Rohr und einem zweiten Rohr mit einem Schaumstoff gefüllt, so ist das erste Rohr vom zweiten Rohr thermisch isoliert, wobei gleichzeitig die Stabilität der erfindungsgemäßen Vorrichtung verbessert wird.

Nach einer weiteren bevorzugten Ausgestaltung der Erfindung wird mindestens in einen Hohlraum zwischen mindestens einem ersten Rohr und einem zweiten Rohr ein strömendes Medium geleitet. Als strömende Medien können dabei feste, flüssige oder gasförmige Stoffe verwendet werden. Durch diese Maßnahme ist es möglich, die zu transportierenden Stoffe während des Transports bei der Wahl geeigneter strömender Medien thermisch zu behandeln. Die erfindungsgemäße Vorrichtung kann durch diese Maßnahme beispielsweise als Wärmetauscher eingesetzt werden.

Gemäß einer weiteren Ausgestaltung der Erfindung wird die Vorrichtung zum Transport von Stoffen als Niederschlagselektrode in einem elektrostatischen Abscheider verwendet. Als elektrostatische Abscheider können dabei Naß- oder Trockenelektrofilter zur Reinigung von transportierten Abgasen verwendet werden. Wird die erfindungsgemäße Vorrichtung zum Transport von Stoffen als Niederschlagselektrode in einem elektrostatischen Abscheider verwendet, so kann ein mit Schadstoffen angereichertes Abgas transportiert und gleichzeitig durch eine elektrostatische Reinigung von den Schadstoffen befreit werden. Werden Naßelektrofilter versendet, so kann mit Wasserdampf gesättigtes Abgas während der Reinigung gekühlt werden, wobei anfallendes Kondensat als elektrisch leitende Flüssigkeit die Abscheidung der Schadstoffe verbessert.

Der Gegenstand der Erfindung wird nachfolgend anhand der Zeichnung (Fig. 1 - 4) näher erläutert.

Fig. 1 zeigt die erfindungsgemäße Vorrichtung im Querschnitt mit dem ersten und zweiten Rohr.

Fig. 2 zeigt die Draufsicht auf das erste und zweite Rohr gemäß "A" in Fig. 1.

Fig. 3 zeigt eine Variante der erfindungsgemäßen Vorrichtung im Querschnitt mit einem ersten, einem zweiten und einem dritten Rohr.

Fig. 4 zeigt die Anordnung des ersten Rohres zum zweiten und zum dritten Rohr gemäß "B" in Fig. 3.

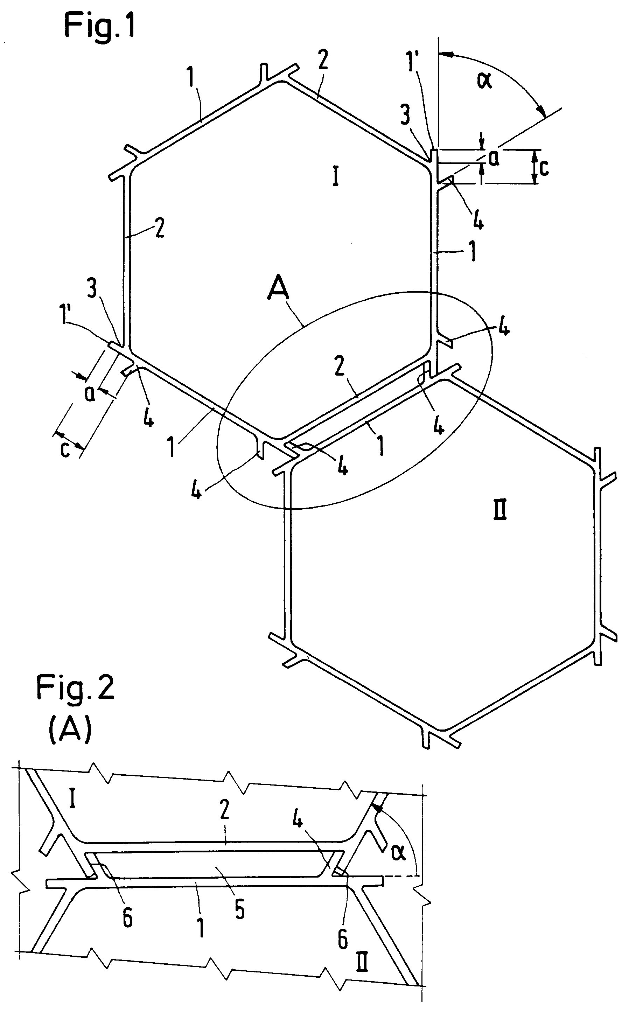

In Fig. 1 wird die erfindungsgemäße Vorrichtung zum Transport von Stoffen dargestellt, die aus einem ersten Rohr (I) und einem zweiten Rohr (II) mit jeweils sechseckigem, wabenförmigen Strömungsquerschnitt besteht. Das erste Rohr (I) besteht aus drei ersten Wandteilen (1) und aus drei zweiten Wandteilen (2), wobei die ersten Wandteile (1) und die zweiten Wandteile (2) nicht nebeneinander angeordnet sind. Die Längskanten (1′) der ersten Wandteile (1) sind im ersten Abstand (a) zur jeweiligen, der Längskante (1′) am nächsten liegenden Verbindungsstelle (3) zwischen dem ersten Wandteil (1) und dem benachbarten zweiten Wandteil (2) angeordnet. An jedem ersten Wandteil (1) sind auf der den zu transportierenden Stoffen abgewandten Seite im zweiten Abstand (c) von der jeweils am nächsten liegenden Längskante (1′) plattenförmige Laschen (4) angeordnet, die zu den jeweils nächstliegenden Längskanten (1′) geneigt sind. Der Winkel (α) zwischen der Ebene der jeweiligen Lasche (4) und der Ebene des jeweiligen ersten Wandteils (1) beträgt 60°. Gegenüber dem zweiten Wandteil (2) des ersten Rohres (I) weist das zweite Rohr (II) ein entsprechendes erstes Wandteil (1) auf, so daß diese beiden Wandteile parallel zueinander angeordnet sind. Die Flächen der Laschen (4) des ersten Wandteils (1) des zweiten Rohres (II), die den jeweiligen Schenkel des Neigungswinkels (α) bilden, liegen an einem Teil des jeweils am nächsten angeordneten ersten Wandteils (1) des ersten Rohres (I) an. Bei der Montage der erfindungsgemäßen Vorrichtung wird das zweite Rohr (II) mit seinen am ersten Wandteil (1) angeordneten Laschen (4) in Transportrichtung der zu transportierenden Stoffe zwischen die ersten Wandteile (1) des ersten Rohres (I) eingeschoben. Senkrecht zur Transportrichtung ist das erste Rohr (I) mit dem zweiten Rohr (II) formschlüssig verbunden, so daß auf relativ schwer durchzuführende Fügeverfahren, wie beispielsweise Schweißen oder Kleben, über die gesamte Längsachse des ersten Rohres (I) bzw. des zweiten Rohres (II) verzichtet werden kann. Auf diese Weise kann die Fertigung der erfindungsgemäßen Vorrichtung in relativ kurzer Zeit erfolgen, so daß die Herstellungskosten der erfindungsgemäßen Vorrichtung weitgehend gering gehalten werden können.

In Fig. 2 ist die formschlüssige Verbindung des ersten Rohres (I) mit dem zweiten Rohr (II) gemäß "A" in Fig. 1 vergrößert dargestellt. Der Neigungswirikel (α) zwischen der Ebene der Lasche (4) und der Ebene des ersten Wandteils (1) des zweiten Rohres (II) beträgt 60°. Zwischen dem ersten Rohr (I) und dem zweiten Rohr (II) wird ein Hohlraum (5) gebildet, der mit einem Schaumstoff gefüllt werden kann, was die Stabilität der erfindungsgemäßen Vorrichtung erhöht. Durch den Hohlraum (5) kann jedoch auch ein strömendes Medium geleitet werden, so daß die zu transportierenden Stoffe während des Transports, je nach Wahl des strömenden Mediums, abgekühlt oder erwärmt werden können. In Fig. 2 sind ferner zwei Verbindungsstellen (6) dargestellt, an welchen das erste Rohr (I) und das zweite Rohr (II) an den Stirnseiten der jeweiligen Laschen (4) miteinander verbunden werden können, was die Stabilität der erfindungsgemäßen Vorrichtung erhöht.

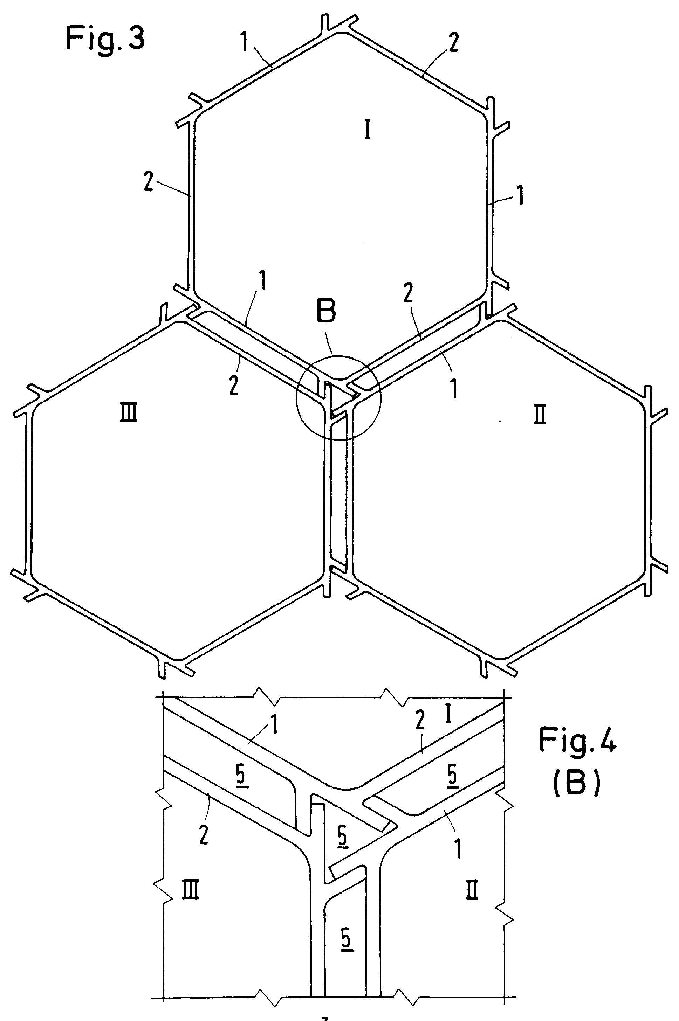

Fig. 3 zeigt eine Variante der erfindungsgemäßen Vorrichtung, bei der neben dem ersten Rohr (I) und dem zweiten Rohr (II) ein drittes Rohr (III) angeordnet ist. Das dritte Rohr (III) entspricht konstruktiv dem ersten Rohr (I) und dem zweiten Rohr (II).

In Fig. 4 ist die gemeinsame Verbindungsstelle des ersten Rohres (I), des zweiten Rohres (II) und des dritten Rohres (III) gemäß "B" in Fig. 3 dargestellt. Auch bei der dargestellten Variante der erfindungsgemäßen Vorrichtung können die Hohlräume (5) mit Schaumstoff gefüllt werden. Ferner ist es möglich, in den Hohlräumen (5) ein strömendes Medium zu leiten.

Die erfindungsgemäße Vorrichtung ist jedoch nicht auf die in den Fig. 1 - 4 dargestellten Ausführungsformen beschränkt. Je nach Menge der zu transportierenden Stoffe kann eine beliebige Anzahl von Rohren miteinander kombiniert werden.

## Patentansprüche

1. Vorrichtung zum Transport von Stoffen, die mindestens aus einem ersten Rohr (I) und einem zweiten Rohr (II) mit jeweils sechseckigem, wabenförmigem Strömungsquerschnitt besteht, wobei das erste Rohr (I) zwei oder drei nicht nebeneinander angeordnete erste Wandteile (1) aufweist, deren Längskanten (1′)im ersten Abstand (a) zur jeweiligen, der Längskante (1′) am nächsten liegenden Verbindungsstelle (3) zwischen dem ersten Wandteil (1) und dem benachbarten zweiten Wandteil (2) angeordnet sind und bei der an den ersten Wandteilen (1) auf ihren, den zu transportierenden Stoffen abgewandten, Seiten im zweiten Abstand (c) von der jeweils am nächsten liegenden Längskante (1′) plattenförmige Laschen (4) angeordnet sind, die zu den jeweils nächstliegenden Längskanten (1′) geneigt sind, wobei der Neigungswinkel (α) zwischen der Ebene der jeweiligen Lasche (4) und der Ebene des jeweiligen ersten Wandteils (1) 60° beträgt und wobei das zweite Rohr (II) mindestens ein entsprechendes erstes Wandteil (1) aufweist, was parallel zum zweiten Wandteil (2) des ersten Rohres (I) angeordnet ist, wobei die Flächen der Laschen (4) des ersten Wandteils (1) des zweiten Rohres (II), die den jeweiligen Schenkel des Neigungswinkels (α) bilden, an einem Teil des jeweils am nächsten angeordneten ersten Wandteils (1) des ersten Rohres (I) anliegen.

2. Vorrichtung nach Anspruch 1, bei der mindestens das erste Rohr (I) und das zweite Rohr (II) aus einem metallischen Werkstoff oder aus einem elektrisch leitenden Kunststoff bestehen.

3. Vorrichtung nach Anspruch 1 oder 2, bei der mindestens das erste Rohr (I) und das zweite Rohr (II) an den Stirnseiten der Laschen (4) durch mindestens eine Verbindungsstelle (6) miteinander verbunden sind.

4. Vorrichtung nach einem der Ansprüche 1 - 3, bei der mindestens ein Hohlraum (5) zwischen mindestens einem ersten Rohr (I) und einem zweiten Rohr (II) mit einem Schaumstoff gefüllt ist.

5. Vorrichtung nach einem der Ansprüche 1 - 3, bei der mindestens in einem Hohlraum (5) zwischen mindestens einem ersten Rohr (I) und einem zweiten Rohr (II) ein strömendes Medium geleitet wird.

6. Verwendung der Vorrichtung zum Transport von Stoffen nach einem der Ansprüche 2 - 5 als Niederschlagselektrode in einem elektrostatischen Abscheider.

## Claims

1. A device for the transport of materials, consisting at least of one first pipe (I) and a second pipe (II) each with a hexagonal, honeycomb flow cross-section, the first pipe (I) having two or three first wall sections (1) not arranged adjacent to each other, the longitudinal edges (1′) of which are located at a first distance (a) from the respective junction point (3) closest to the longitudinal edge (1′) between the first wall section (1) and the adjacent second wall section (2) and in which on the first wall sections (1), on their sides remote from the substances to be transported, at a second distance (c) from the respective closest longitudinal edge (1′) plate-shaped tongues (4) are located, which are inclined towards the respective closest longitudinal edges (1′), the angle of inclination (α) between the plane of the respective tongue (4) and the plane of the respective first wall section (1) being 60° and the second pipe (II) having at least one corresponding first wall section (1) which is arranged parallel to the second wall section (2) of the first pipe (I), the surfaces of the tongues (4) of the first wall section (1) of the second pipe (II), which form the respective arm of the angle of inclination (α), bearing against a part of the respective closest first wall section (1) of the first pipe (I).

2. A device according to Claim 1, in which at least the first pipe (I) and the second pipe (II) are made of a metallic material or of an electrically conductive plastics material.

3. A device according to Claim 1 or 2, in which at least the first pipe (I) and the second pipe (II) are joined together at the end faces of the tongues (4) by at least one junction point (6).

4. A device according to one of claims 1 to 3, in which at least one cavity (5) between at least one first pipe (I) and a second pipe (II) is filled with a foam material.

5. A device according to one of Claims 1 to 3, in which a fluid medium is guided at least in one cavity (5) between at least one first pipe (I) and a second pipe (II).

6. The use of the device for transporting substances according to one of Claims 2 to 5 as a collecting electrode in an electrostatic precipitator.

## Revendications

1. Dispositif de transport de substances, qui est constitué au moins d'un premier tuyau (I) et d'un deuxième tuyau (II) respectivement avec une section de passage hexagonale, de forme alvéolaire, le premier tuyau (I) présentant deux ou trois premières parties de paroi (1) non-adjacentes, dont les arêtes longitudinales (1′) sont disposées à une première distance (a) de la jonction (3) respective, la plus proche de l'arête longitudinale (1′), entre la première partie de paroi (1) et la deuxième partie de paroi adjacente (2) et où sur les premières parties de paroi (1) sont disposées des attaches (4) sous forme de plaques, sur leurs côtés opposés par rapport aux substances à transporter, à une deuxième distance (c) de l'arête longitudinale (1′) respective la plus proche, attaches qui sont inclinées vers les arêtes longitudinales (1′) respectives les plus proches, où l'angle d'inclinaison (α) entre le plan de l'attache (4) respective et le plan de la première partie de paroi (1) respective vaut 60° et où le deuxième tuyau (II) présente au moins une première partie de paroi (1) correspondante qui est disposée de manière parallèle à la deuxième partie de paroi (2) du premier tuyau (I), les surfaces des attaches (4) de la première partie de paroi (1) du deuxième tuyau (II), qui forment le côté respectif de l'angle d'inclinaison (α), s'appliquant contre une partie de la première partie de paroi (1) du premier tuyau (I), respectivement la plus proche.

2. Dispositif selon la revendication 1, où au moins le premier tuyau (I) et le deuxième tuyau (II) sont formés d'un matériau métallique ou d'une matière synthétique électroconductrice.

3. Dispositif selon la revendication 1 ou 2, où au moins le premier tuyau (I) et le deuxième tuyau (II) sont reliés ensemble par les faces frontales des attaches (4) par au moins une jonction (6).

4. Dispositif selon l'une quelconque des revendications 1 à 3, où la au moins une cavité (5) entre au moins un premier tuyau (I) et un deuxième tuyau (II) est remplie avec un matériau expansé.

5. Dispositif selon l'une quelconque des revendications 1 à 3, où un milieu fluide est conduit par au moins une cavité (5) entre au moins un premier tuyau (I) et un deuxième tuyau (II).

6. Utilisation du dispositif de transport de substances selon l'une quelconque des revendications 2 à 5 comme électrode de précipitation dans un séparateur électrostatique.
